# EUROPÄISCHE PATENTSCHRIFT

(11) **EP 3 482 473 B1**
(45) Veröffentlichungstag und Bekanntmachung des Hinweises auf die Patenterteilung: **10.06.2020**
(21) Anmeldenummer: 17735061.8
(22) Anmeldetag: 27.06.2017
(51) Int. Cl.: H02J 7/00, H02J 7/35, H02J 3/32, H02J 3/38

(54) **VERFAHREN ZUM AUSGLEICHEN VON LADEZUSTÄNDEN MEHRERER BATTERIEMODULE EINER BATTERIE UND ENTSPRECHENDE VORRICHTUNG**
METHOD FOR EQUALIZING STATES OF CHARGE OF A PLURALITY OF BATTERY MODULES OF A BATTERY, AND CORRESPONDING APPARATUS
PROCÉDÉ D'ÉQUILIBRAGE D'ÉTATS DE CHARGE DE PLUSIEURS MODULES D'UNE BATTERIE ET DISPOSITIF CORRESPONDANT

(30) Priorität: 11.07.2016 DE 102016212564
(43) Veröffentlichungstag der Anmeldung: 15.05.2019
(73) Patentinhaber: Robert Bosch GmbH, 70442 Stuttgart (DE)
(72) Erfinder: WEIL, Thomas, 71665 Vaihingen (DE); MIELCAREK, Paul, 70565 Stuttgart (DE); BECK, Tobias Alexander, 70188 Stuttgart (DE)
(86) Internationale Anmeldenummer: PCT/EP2017/065760
(87) Internationale Veröffentlichungsnummer: WO 2018/010945

(56) Entgegenhaltungen:
- EP-A1- 2 083 494
- EP-A2- 2 418 754
- US-A1- 2014 067 151
- US-A1- 2014 145 678

## Beschreibung

Die vorliegende Erfindung betrifft ein Verfahren zum Ausgleichen von Ladezuständen mehrerer in Reihe geschalteter Batteriemodule einer Batterie und eine Vorrichtung zum Durchführen eines solchen Verfahrens.

### Stand der Technik

Aus dem Stand der Technik ist ein Verfahren zum Ausgleichen von Ladezuständen mehrerer in Reihe geschalteter Batteriemodule einer Batterie bekannt. Ein jedes der Batteriemodule weist mehrere Batteriezellen auf, die parallel zueinander geschaltet sind. Die Batterie ist dazu ausgebildet, einen Verbraucher mit elektrischer Energie zu versorgen und elektrische Energie, die von einer stationären Energieumwandlungsanlage durch Umwandeln von erneuerbarer Energie erzeugt wird, zu speichern. Zum Ausgleichen der Ladezustände kann jedes Batteriemodul über einen diesem zugeordneten Lastwiderstand entladen werden. Dazu wird für jedes Batteriemodul eine jede diesem zugeordnete erste Differenz zwischen einer an dem jeweiligen Batteriemodul anliegenden Spannung und einer an einem anderen der Batteriemodule anliegenden Spannung bestimmt. Alternativ oder zusätzlich wird für jedes Batteriemodul eine Anzahl von Lade- und Entladezyklen bestimmt, die das jeweilige Batteriemodul seit einem Zeitpunkt, zu dem das jeweilige Batteriemodul über den diesem zugeordneten Lastwiderstand zuletzt entladen wurde, bis zu einem aktuellen Zeitpunkt erfahren hat. Dabei wird jedes der Batteriemodule erkannt, für welches eine diesem zugeordnete erste Differenz einen ersten Spannungsgrenzwert und/oder die von diesem erfahrene Anzahl von Lade- und Entladezyklen einen ersten Zahlengrenzwert überschreitet. Ferner wird jedes erkannte Batteriemodul über den diesem zugeordnete Lastwiderstand solange entladen, bis die diesem zugeordnete und den ersten Spannungsgrenzwert überschreitende erste Differenz gleich Null oder negativ ist. Ein solches Verfahren ist aus dem Dokument JP 2013/094033 A bekannt. Ein ähnliches Verfahren ist auch aus jedem der Dokumente US 2011/0121785 A1, EP 2 083 494 A1 und US 2014/0145678 bekannt.

Bezüglich eines solchen Verfahrens ist zu berücksichtigen, dass jede einem der Batteriemodule zugeordnete erste Differenz erst nach einigen Lade- und Entladezyklen des jeweiligen Batteriemoduls den ersten Spannungsgrenzwert erreichen kann. Dadurch kann ein Entladen jedes Batteriemoduls über den diesem zugeordneten Lastwiderstand zu einem ungünstigen Zeitpunkt stattfinden. Ein solches Entladen eines der Batteriemoduls kann beispielsweise zu einem Zeitpunkt eines zu betrachtenden Tages erfolgen, zu dem die Batteriemodule jeweils einen hohen Ladezustand aufweisen und zu dem die Energieumwandlungsanlage keine weitere elektrische Energie erzeugen und der Batterie zuführen kann. Hierbei wird ein Teil einer von der Energieumwandlungsanlage an dem zu betrachtenden Tag erzeugten und in der Batterie gespeicherten elektrischen Energiemenge in Wärme umgewandelt beziehungsweise verheizt, ohne dass die Batterie dem Verbraucher elektrische Energie liefert und ohne das ein Nachladen der Batterie an dem zu betrachtenden Tag mehr möglich ist. Statt einem "Verheizen" des zuvor genannten Energiemengenanteils, wäre ein Nutzen dieses Energiemengenanteils zum Versorgen des Verbrauchers mit elektrischer Energie wirtschaftlicher.

Ein anderer Aspekt ist, dass bei hohen Werten des ersten Spannungsgrenzwertes und des ersten Zahlengrenzwertes Abweichungen, die zwischen an den Batteriemodulen anliegenden Spannungen vorkommen, sehr groß werden können. Diese sehr großen Abweichungen führen zu einer deutlichen Verringerung einer nutzbaren Speicherkapazität der Batterie. Ein seltenes Wiederholen eines Entladens der Batteriemodule über die zugeordneten Lastwiderstände, wie zum Beispiel erst nach ein paar hundert Lade- und Entladezyklen, führt zu einer Verringerung der nutzbaren Speicherkapazität der Batterie. Folglich kann weniger elektrische Energie in der Batterie zwischengespeichert werden.

Das Dokument US 2014/0067151 A1 beschreibt ein System zum Regeln von Leistungsabgabe. Das System umfasst eine erste Speichervorrichtung, die an ein Leistungsnetz elektrisch gekoppelt ist und eine erste Energiequelle umfasst. Das System umfasst ferner eine zweite Speichervorrichtung, die an das Leistungsnetz elektrisch gekoppelt ist und eine zweite Energiequelle umfasst. Das System umfasst ferner eine Leistungsüberwachungseinheit, die sich in Kommunikation mit der ersten und der zweiten Speichereinheit befindet und dazu ausgebildet ist, Informationen bezüglich der Konfiguration der ersten und der zweiten Speichereinheit zu empfangen. Das System umfasst ferner eine erste Systemsteuerung, die dazu ausgebildet ist, die empfangenen Informationen zum Steuern eines zwischen dem Leistungsnetz und der ersten Speichereinheit stattfindenden Energietransfers zu verwenden. Das System umfasst ferner ein Optimierungsmodul, das dazu ausgebildet ist, externe Größen zu empfangen und ein Set von Betriebsparametern basierend auf den externen Größen zu generieren. Die erste Systemsteuerung ist ferner dazu ausgebildet, die generierten Betriebsparameter zu empfangen und die Betriebsparameter derartig zum Steuern einer von einer ersten Phase des Leistungsnetzes transportierten Energiemenge zu verwenden, dass die Energiemenge einen Grenzwert unterschreitet. Dabei können die externen Daten Wetterdaten sein. Ein ähnliches System ist auch aus dem Dokument EP 2 418 754 A2 bekannt.

### Offenbarung der Erfindung

Erfindungsgemäß wird ein Verfahren zum Ausgleichen von Ladezuständen mehrerer in Reihe geschalteter Batteriemodule einer Batterie mit den Merkmalen des Anspruchs 1 bereitgestellt. Die Batterie ist zum Versorgen eines Verbrauchers mit elektrischer Energie und zum Speichern von elektrischer Energie, die von einer stationären Energieumwandlungsanlage durch Umwandeln von erneuerbarer Energie erzeugt wird, vorgesehen. Die Energieumwandlungsanlage ist zum Umwandeln erneuerbarer Energie, wie zum Beispiel Solarenergie, in elektrische Energie ausgebildet. Das Verfahren umfasst einen ersten, zweiten und dritten Schritt. Der erste Schritt umfasst ein Identifizieren eines jeden der Batteriemodule, das zum Ausgleichen der Ladezustände über einen diesem zugeordneten Lastwiderstand zu entladen ist. Der zweite Schritt umfasst eine für jedes Batteriemodul oder jedes identifizierte Batteriemodul zu einem ersten Zeitpunkt eines ersten Tages durchzuführende und dem jeweiligen Batteriemodul zugeordnete erste Auswertung seines zu dem ersten Zeitpunkt vorkommenden Ladezustands und/oder einer ersten elektrischen Energiemenge und/oder einer zweiten elektrischen Energiemenge. Die erste elektrische Energiemenge ist diejenige elektrische Energiemenge, die während des ersten Tages von der Batterie dem Verbraucher voraussichtlich zugeführt wird. Die zweite elektrische Energiemenge ist diejenige elektrische Energiemenge, die während des ersten Tages von der Energieumwandlungsanlage der Batterie voraussichtlich zugeführt werden kann. Der dritte Schritt umfasst ein für jedes identifizierte Batteriemodul anhand der diesem zugeordneten ersten Auswertung durchzuführendes Bestimmen ob ein Entladezeitpunkt, zu dem das jeweilige Batteriemodul über den diesem zugeordneten Lastwiderstand entladen wird, während des ersten Tages vorkommt. Bevorzugt umfasst jedes Batteriemodul mehrere parallel zueinander geschaltete Batteriezellen.

Bei dem zuvor beschriebenen Verfahren wird anhand der ersten Auswertung entschieden, welche der identifizierten Batteriemodule während des ersten Tages über die zugeordneten Lastwiderstände entladen werden. Ferner wird anhand der ersten Auswertung entschieden, welche der identifizierten Batteriemodule während des ersten Tages nicht über die zugeordneten Lastwiderstände entladen werden. Mit anderen Worten werden die Ladezustände der Batteriemodule der Batterie gemäß einer neuartigen Betriebsweise der Batteriemodule ausgeglichen, bei der für jedes identifizierte Batteriemodul anhand der diesem zugeordneten ersten Auswertung ein geeigneter Entladezeitpunkt bestimmt wird. Auf diese Weise wird erreicht, dass eine Speicherkapazität der Batterie besser ausgenutzt wird. Somit wird eine Steigerung der Wirtschaftlichkeit der entsprechenden stationären Energieumwandlungsanlage erreicht.

Der zweite und dritte Schritt des zuvor beschriebenen Verfahrens umfassen jeweils einen ersten und zweiten Teilschritt. Der erste Teilschritt des zweiten Schrittes umfasst ein für jedes Batteriemodul oder jedes identifizierte Batteriemodul durchzuführendes Bestimmen eines dem jeweiligen Batteriemodul zuführbaren ersten Anteils der ersten Energiemenge anhand der ersten Energiemenge und einer Anzahl der Batteriemodule. Der erste Teilschritt des zweiten Schrittes umfasst ferner ein für jedes Batteriemodul oder jedes identifizierte Batteriemodul durchzuführendes Bestimmen eines von dem jeweiligen Batteriemodul zuzuführenden zweiten Anteils der zweiten Energiemenge anhand der zweiten Energiemenge und der Anzahl der Batteriemodule. Der erste Teilschritt des zweiten Schrittes umfasst weiterhin ein für jedes Batteriemodul oder jedes identifizierte Batteriemodul durchzuführendes Bestimmen einer zu dem ersten Zeitpunkt in dem jeweiligen Batteriemodul gespeicherten Energiemenge anhand des zu dem ersten Zeitpunkt vorkommenden Ladezustands des jeweiligen Batteriemoduls. Der zweite Teilschritt des zweiten Schrittes umfasst auch ein für jedes Batteriemodul oder jedes identifizierte Batteriemodul durchzuführendes Bestimmen einer Überschussenergiemenge. Die Überschussenergiemenge jedes Batteriemoduls oder jedes identifizierten Batteriemoduls ist durch Subtrahieren des von dem jeweiligen Batteriemodul zuzuführenden zweiten Anteils der zweiten Energiemenge von einer Summe des dem jeweiligen Batteriemodul zuführbaren ersten Anteils der ersten Energiemenge und der in dem jeweiligen Batteriemodul zu dem ersten Zeitpunkt gespeicherten Energiemenge zu bestimmen. Der erste Teilschritt des dritten Schrittes umfasst ein Auswählen des Entladezeitpunktes jedes identifizierten Batteriemoduls, dessen Überschussenergiemenge positiv ist, als ein während des ersten Tages vorkommender Zeitpunkt. Der zweite Teilschritt des dritten Schrittes umfasst ein Verschieben des Entladezeitpunktes jedes identifizierten Batteriemoduls, dessen Überschussenergiemenge gleich Null oder negativ ist, auf einen nach dem ersten Tag folgenden Tag. Auf diese Weise kann ein Algorithmus bereitgestellt werden, mittels dessen für jedes identifizierte Batteriemodul berechnet werden kann, ob ein während des ersten Tages stattfindendes Entladen des jeweiligen Batteriemoduls über den zugeordneten Lastwiderstand energetisch sinnvoll ist. Wenn die für ein identifiziertes Batteriemodul bestimmte Überschussenergie positiv ist, ist ein während des ersten Tages stattfindendes Entladen des jeweiligen Batteriemoduls energetisch sinnvoll, da sonst diese Überschussenergie entweder nicht benötigt und somit gar nicht genutzt oder zu schlechten Konditionen eingespeist wird. Wenn die für ein identifiziertes Batteriemodul bestimmte Überschussenergie gleich Null oder negativ ist, ist ein während des ersten Tages stattfindendes Entladen des jeweiligen Batteriemoduls energetisch nicht sinnvoll. Der Grund dafür ist, dass, wenn die für ein identifiziertes Batteriemodul bestimmte Überschussenergie gleich Null oder negativ ist, eine dem jeweiligen Batteriemodul während des ersten Tages zur Verfügung stehende elektrische Energiemenge zu klein oder gerade ausreichend ist.

Alternativ umfasst der zweite Schritt des zuvor beschriebenen Verfahrens einen dritten Teilschritt und der dritte Schritt des zuvor beschriebenen Verfahrens einen dritten und vierten Teilschritt. Der dritte Teilschritt des zweiten Schrittes umfasst ein Vergleichen des zu dem ersten Zeitpunkt vorkommenden Ladezustands jedes identifizierten Batteriemoduls mit einem ersten Ladezustandsgrenzwert, der insbesondere 0,7 beträgt. Der dritte Teilschritt des dritten Schrittes umfasst ein Auswählen des Entladezeitpunktes jedes identifizierten Batteriemoduls, dessen zu dem ersten Zeitpunkt vorkommender Ladezustand den ersten Ladezustandsgrenzwert überschreitet, als ein während des ersten Tages vorkommender Zeitpunkt. Der vierte Teilschritt des dritten Schrittes umfasst ein Verschieben des Entladezeitpunktes jedes identifizierten Batteriemoduls, dessen zu dem ersten Zeitpunkt vorkommender Ladezustand den ersten Ladezustandsgrenzwert erreicht oder unterschreitet, auf einen nach dem ersten Tag folgenden Tag. Auf diese Weise wird jedes identifizierte Batteriemodul, das über den diesem zugeordneten Lastwiderstand während des ersten Tages zu entladen ist, erkannt, ohne dass ein online Aufrufen von Wetterdaten notwendig ist. Wenn ein identifiziertes Batteriemodul während des ersten Tages beispielsweise schon am Mittag oder am frühen Nachmittag einen Ladezustand oberhalb von zum Beispiel 0,7 aufweist, wird dieses Batteriemodul während des ersten Tages über den diesem zugeordneten Lastwiderstand entladen. Der Grund dafür ist, dass eine Wahrscheinlichkeit, mit der dieses Batteriemodul während des ersten Tages vollständig aufgeladen wird, sehr hoch ist. Wenn ein identifiziertes Batteriemodul während des ersten Tages beispielsweise erst um 19 Uhr einen Ladezustand oberhalb von zum Beispiel 0,7 aufweist, wird das Entladezeitpunkt dieses Batteriemoduls auf einen nach dem ersten Tag folgenden Tag verschoben. Der Grund dafür ist, dass eine Wahrscheinlichkeit, mit der dieses Batteriemodul während des ersten Tages vollständig aufgeladen wird, sehr klein ist.

Die Unteransprüche zeigen bevorzugte Weiterbildungen der Erfindung.

Bei einem zuvor beschriebenen Verfahren wird bevorzugt ein Erkennungsmerkmal, insbesondere eine Kennnummer, jedes identifizierten Batteriemoduls, dessen Entladezeitpunkt nicht während des ersten Tages vorkommt, gespeichert. Auf diese Weise kann jedes Batteriemodul, dessen Erkennungsmerkmal gespeichert wurde, an einem unmittelbar nach dem ersten Tag folgenden zweiten Tag, an dem ein zuvor beschriebenes Verfahren wiederholt wird, sofort als Batteriemodul identifiziert werden, der über den diesem zugeordnete Lastwiderstand zu entladen ist. Bei dem entsprechenden während des zweiten Tages durchzuführenden Verfahren wird dann entschieden, ob der Entladezeitpunkt jedes Batteriemoduls, dessen Erkennungsmerkmal während des ersten Tages gespeichert worden ist, während des zweiten Tages vorkommt.

Bei einem zuvor beschriebenen Verfahren kann jeder Tag eines Kalenderjahres als der erste Tag ausgewählt werden.

Bevorzugt ist die Energieumwandlungsanlage in Form einer Photovoltaikanlage, die Solarenergie in elektrische Energie umwandelt, ausgebildet. Weiter bevorzugt stellt der Verbraucher einen Haushalt eines Hauses dar.

Bevorzugt wird jedes identifizierte Batteriemodul, dessen Entladezeitpunkt während des ersten Tages vorkommt, zum Ausgleichen der Ladezustände der Batteriemodule solange über den diesem zugeordneten Lastwiderstand entladen, bis sein Ladezustand einem kleinsten Ladezustand der Batteriemodule entspricht oder gleich einem kleinsten Ladezustand sonstiger Batteriemodule ist.

Bei einer bevorzugten Weiterbildung der Erfindung ist der erste Zeitpunkt 12 Uhr mittags. Alternativ liegt der erste Zeitpunkt in einem sich symmetrisch um 12 Uhr mittags erstreckenden ersten Zeitraum. Insbesondere umfasst der erste Zeitraum eine zwischen 1 und 6 liegende natürliche Anzahl von Stunden.

Bei einer bevorzugten Weiterbildung der Erfindung umfasst ein zuvor beschriebenes Verfahren einen vierten und fünften Schritt. Der vierte Schritt umfasst ein zu einem während des ersten Tages vor dem ersten Zeitpunkt vorkommenden zweiten Zeitpunkt stattfindendes Durchführen eines online Abrufens von Wetterdaten. Der fünfte Schritt umfasst ein Bestimmen der ersten Energiemenge anhand der Wetterdaten. Dadurch erfolgt in einfacher Weise eine Abschätzung der ersten Energiemenge, die eine elektrische Energiemenge darstellt, die von der Energieumwandlungsanlage der Batterie täglich zur Verfügung gestellt werden kann.

Bei einer bevorzugten Weiterbildung der Erfindung umfasst ein zuvor beschriebenes Verfahren einen sechsten und siebten Schritt. Der sechste Schritt umfasst ein Bestimmen während eines jeden Tages eines zweiten Zeitraumes einer dritten Energiemenge, die während des jeweiligen Tages von der Batterie dem Verbraucher zugeführt wird. Der erste Zeitraum liegt unmittelbar vor dem ersten Tag und umfasst wenigsten zwei unmittelbar aufeinander folgende Tage. Der siebte Schritt umfasst ein Bestimmen der zweiten Energiemenge anhand jeder bestimmten dritten Energiemenge. Auf diese Weise erfolgt ein Abschätzen der zweiten Energiemenge in Abhängigkeit von Energiemengen, die jeweils von dem Verbraucher während eines vergangenen Tages tatsächlich verbraucht wurden. Alternativ kann die zweite Energiemenge ein für den ersten Tag manuell eingestellter Wert der Energieumwandlungsanlage sein.

Bei einer bevorzugten Weiterbildung der Erfindung umfasst der zweite Schritt eines zuvor beschriebenen Verfahrens einen vierten und fünften Teilschritt und der dritte Schritt des entsprechenden Verfahrens einen fünften und sechsten Teilschritt. Der vierte Teilschritt des zweiten Schrittes umfasst ein Vergleichen der zweiten oder jeder dritten Energiemenge mit einem ersten Energiemengengrenzwert. Der fünfte Teilschritt des zweiten Schrittes umfasst ein Durchführen der ersten und der zweiten Teilschritte des zweiten Schrittes, wenn die zweite oder jede dritte Energiemenge den zweiten Energiemengengrenzwert überschreitet. Alternativ umfasst der fünfte Teilschritt des zweiten Schrittes ein Durchführen des dritten Teilschritts des zweiten Schrittes, wenn die zweite oder jede dritte Energiemenge den ersten Energiemengengrenzwert überschreitet. Der fünfte Teilschritt des dritten Schrittes umfasst ein Auswählen des Entladezeitpunktes jedes identifizierten Batteriemoduls als ein während des ersten Tages vorkommender Zeitpunkt, wenn die zweite oder jede dritte Energiemenge den ersten Energiemengengrenzwert erreicht oder unterschreitet. Der sechste Teilschritt des dritten Schrittes umfasst ein Durchführen der ersten und zweiten Teilschritte des dritten Schrittes, wenn die zweite oder jede dritte Energiemenge den ersten Energiemengengrenzwert überschreitet. Alternativ umfasst der sechste Teilschritt des dritten Schrittes ein Durchführen der dritten und vierten Teilschritte des dritten Schrittes, wenn die zweite oder jede dritte Energiemenge den ersten Energiemengengrenzwert überschreitet. In einem Fall, in dem der Verbraucher einen Haushalt eines Hauses darstellt, kann der erste Energiemengengrenzwert eine maximale Energiemenge darstellen, die von dem Haushalt während eines Zeitraumes, während dessen die Bewohner des Hauses in Urlaub sind, täglich verbraucht wird. So kann anhand des Vergleichens gemäß dem vierten Teilschrittes des zweiten Schrittes festgestellt werden, ob die Bewohner des Hauses in Urlaub sind. Wenn die Bewohner des Hauses in Urlaub sind, wird jedes identifizierte Batteriemodul als ein Batteriemodul erkannt, dessen Entladezeitpunkt während des ersten Tages vorkommt, ohne dass ein online Abrufen von Wetterdaten notwendig ist. Auf diese Weise wird erreicht, dass eine optimale Speicherkapazität der Batterie dann zur Verfügung steht, wenn die Bewohner wieder im Haus sind und die Batterie voll nutzen.

Vorteilhaft bei einem zuvor beschriebenen Verfahren ist, dass zum Ausgleichen der Ladezustände der Batteriemodule der Batterie jedes Batteriemodul zu einem energetisch günstigen Entladezeitpunkt über den diesem zugeordneten Lastwiderstand entladen wird. Dadurch kann zum Ausgleichen der Ladezustände der Batteriemodule jedes der Batteriemodule über den diesem zugeordneten Lastwiderstand häufiger als sonst üblich entladen werden. Mit anderen Worten kann ein Ausgleichen der Ladezustände der Batteriemodule der Batterie häufiger als sonst üblich durchgeführt werden. Dadurch wird die Speicherkapazität der Batterie besser ausgenutzt.

Bei einer bevorzugten Weiterbildung der Erfindung umfasst der erste Schritt eines zuvor beschriebenen Verfahrens ein zu einem vor dem ersten Zeitpunkt vorkommenden oder zu einem während des ersten Tages nach dem ersten Zeitpunkt vorkommenden dritten Zeitpunkt durchzuführendes erstes Erkennen. Durch das erste Erkennen wird jedes der Batteriemodule erkannt, für welches eine diesem zugeordnete erste Differenz zwischen einer an dem jeweiligen Batteriemodul zu dem dritten Zeitpunkt anliegenden Spannung und einer an einem anderen der Batteriemodule zu dem dritten Zeitpunkt anliegenden Spannung einen ersten Spannungsgrenzwert überschreitet. Insbesondere beträgt der erste Spannungsgrenzwert 100 mV. Alternativ oder zusätzlich wird durch das erste Erkennen jedes der Batteriemodule erkannt, welches seit einem Zeitpunkt, zu dem das jeweilige Batteriemodul über den diesem zugeordneten Lastwiderstand zuletzt entladen wurde, bis zu dem dritten Zeitpunkt eine einen ersten Zahlengrenzwert überschreitende Anzahl von Lade- und Entladezyklen erfahren hat. Jedes mittels des ersten Erkennens erkannte Batteriemodul entspricht jeweils einem identifizierten der Batteriemodule, welches über den diesem zugeordneten Lastwiderstand zu entladen ist.

Bei einer bevorzugten Weiterbildung der Erfindung ist der dritte Zeitpunkt ein während eines unmittelbar vor dem ersten Tag liegenden Tages vorkommender Zeitpunkt, zu dem jedes Batteriemodul ein Ladezustand aufweist, der einen zweiten Ladezustandsgrenzwert überschreitet. Insbesondere beträgt der zweite Ladezustandsgrenzwert 0,9.

Hierbei zu berücksichtigen ist, dass jedes Batteriemodul eine Spannung-Ladezustands-Kennlinie aufweist, deren Steigung stark von einem Wertebereich, in dem der Ladezustand des jeweiligen Batteriemoduls liegt, abhängig ist. Eine solche Kennlinie gibt einen Verlauf einer an einem der Batteriemodule anliegenden Spannung in Abhängigkeit von einem Ladezustand des jeweiligen Batteriemoduls an. Jedes Batteriemodul kann einen zwischen 0 und 1 liegenden Ladezustand aufweisen. Für kleine Ladezustände, die beispielsweise unterhalb von 0,15 liegen und für hohe Ladezustände, die beispielweise oberhalb von 0,9 liegen, weist die Kennlinie jedes Batteriemoduls eine große Steigung auf. Für mittlere Ladezustände, die beispielsweise zwischen 0,15 und 0,9 liegen, weist die Kennlinie jedes Batteriemoduls eine relativ kleine Steigung auf. Das bedeutet, dass für kleine und große Ladezustände eine vordefinierte Änderung eines Ladezustands jedes Batteriemoduls zu eine Änderung einer an dem jeweiligen Batteriemodul anliegenden Spannung führt, die deutlich größer als eine Änderung dieser Spannung ist, die für mittlere Ladezustände vorkommt.

Bei einem zuvor beschriebenen Verfahren wird für jedes Batteriemodul die diesem zugeordnete erste Differenz bevorzugt zu einem Zeitpunkt gemessen, zu dem jedes Batteriemodul einen großen Ladezustand aufweist, der oberhalb von 0.9 liegt. Auf diese Weise wird jedes Batteriemodul, das über den diesem zugeordneten Lastwiderstand zu entladen ist, mit einer sehr großen Wahrscheinlichkeit erkannt. Der Grund dafür ist, dass bei hohen Ladezuständen der Batteriemodule bereits kleine Unterschiede zwischen den Ladezuständen der Batteriemodule zu sehr großen und folglich auch sehr genau messbaren Unterschieden zwischen den an den Batteriemodulen anliegenden Spannungen führen.

Bei einer bevorzugten Weiterbildung der Erfindung umfasst ein zuvor beschriebenes Verfahren einen achten und neunten Schritt. Der achte Schritt umfasst ein zu einem während des ersten Tages vorkommenden vierten Zeitpunkt durchzuführendes zweites Erkennen. Durch das zweite Erkennen wird jedes Batteriemodul erkannt, für welches eine diesem zugeordnete zweite Differenz zwischen einer an dem jeweiligen Batteriemodul zu dem vierten Zeitpunkt anliegenden Spannung und einer an einem anderen der Batteriemodule zu dem vierten Zeitpunkt anliegenden Spannung einen zweiten Spannungsgrenzwert überschreitet. Der zweite Spannungsgrenzwert ist größer als der erste Spannungsgrenzwert. Alternativ oder zusätzlich wird durch das zweite Erkennen jedes Batteriemodul erkannt, welches seit einem Zeitpunkt, zu dem das jeweilige Batteriemodul über den zugeordneten Lastwiderstand zuletzt entladen wurde, bis zu dem vierten Zeitpunkt eine einen zweiten Zahlengrenzwert überschreitende Anzahl von Lade- und Entladezyklen erfahren hat. Der zweite Zahlengrenzwert ist größer als der erste Zahlengrenzwert. Der neunte Schritt umfasst ein Auswählen für jedes mittels des zweiten Erkennens erkannte Batteriemodul eines während des ersten Tages vorkommenden Entladezeitpunktes, zu dem das jeweilige Batteriemodul über den diesem zugeordneten Lastwiderstand entladen wird. Durch das zweite Erkennen kann jedes Batteriemodul, dessen Entladezeitpunkt während wenigstens eines vor dem ersten Tag liegenden Tages bereits ein- oder mehrmals verschoben wurde und deswegen einen kritisch hohen Wert der diesem zugeordneten zweiten Differenz und/oder der erfahrenen Anzahl der Lade- und Entladezyklen aufweist, sicher erkannt werden. Gemäß dem neunten Schritt wird dann ein Entladen jedes mittels des zweiten Erkennens erkannten Batteriemoduls erzwungenermaßen während des ersten Tages durchgeführt. Auf diese Weise wird eine Betriebssicherheit der Batterie erhöht.

Gemäß einer bevorzugten Weiterbildung der Erfindung umfasst der dritte Schritt eines zuvor beschriebenen Verfahrens einen siebten Teilschritt. Der siebte Teilschritt des dritten Schrittes umfasst ein Auswählen des Entladezeitpunktes jedes Batteriemoduls, das während des ersten Tages über den diesem zugeordneten Lastwiderstand zu entladen ist, als ein Zeitpunkt, der während des ersten Tages in einem ersten Zustand der Batterie vorkommt. In dem ersten Zustand der Batterie weist jedes Batteriemodul einen Ladezustand auf, der den zweiten Ladezustandsgrenzwert überschreitet oder der in einem ersten Ladezustandswertebereich, der einen Ladezustandswert von 0,5 umfasst, liegt. Der zweite Ladezustandsgrenzwert beträgt insbesondere 0,9. Der Ladezustandswertebereich erstreckt sich insbesondre zwischen 0,15 und 0,9.

Bei einem zuvor beschriebenen Verfahren weist jedes Batteriemodul während des ersten Zustands der Batterie bevorzugt einen oberhalb von 0.9 liegenden und folglich großen Ladezustand auf. Wie zuvor schon erwähnt wurde, ist die bei großen Ladezuständen vorkommende Steigung der Spannung-Ladezustands-Kennlinie jedes Batteriemoduls sehr groß. In einem solchen Fall kann beim Entladen der während des ersten Zustands über die zugeordneten Lastwiderstände zu entladenden Batteriemodule eine Messung von an den Batteriemodulen anliegenden Spannungen durchgeführt werden. Da während dieser Messung die Steigung der zuvor beschriebenen Kennlinie jedes Batteriemoduls sehr groß ist, führen bereits kleine Unterschiede zwischen den Ladezuständen der Batteriemodule zu sehr großen Unterschieden zwischen den an den Batteriemodulen anliegenden Spannungen. Folglich kann während dieser Messung ein Zeitpunkt, zu dem eine an einem sich über den zugeordneten Lastwiderstand entladenden Batteriemodul anliegende Spannung einer kleinsten der an den Batteriemodulen anliegenden Spannungen entspricht oder gleich einer kleinsten der an sonstiger Batteriemodule anliegenden Spannungen ist, sehr genau bestimmt werden. Mit anderen Worten kann anhand dieser Messung ein Entladezeitraum der während des ersten Tages über die zugeordneten Lastwiderstände zu entladenden Batteriemodule sehr genau bestimmt werden.

Bevorzugt umfasst ein zuvor beschriebenes Verfahren einen zehnten und elften Schritt. Der zehnte Schritt umfasst ein für jedes Batteriemodul, dessen Entladezeitpunkt während des ersten Tages vorkommt, durchzuführendes Bestimmen einer jeden dem jeweiligen Batteriemodul zugeordneten dritten Differenz. Jede einem solchen Batteriemodul zugeordnete dritte Differenz ist eine Differenz zwischen einer an dem jeweiligen Batteriemodul zu einem fünften Zeitpunkt anliegenden Spannung und einer an einem anderen der Batteriemodule zu dem fünften Zeitpunkt anliegenden Spannung. Der fünfte Zeitpunkt ist ein während des ersten Tages vorkommender Zeitpunkt, zu dem jedes Batteriemodul, das während des ersten Tages über den diesem zugeordneten Lastwiderstand zu entladen ist, bereits entladen wurde, und zu dem ein Ladezustand jedes Batteriemoduls den zweiten Ladezustandsgrenzwert, der insbesondere 0.9 beträgt, überschreitet. Der elfte Schritt umfasst einen für jedes Batteriemodul, dessen Entladezeitpunkt während des ersten Tages vorkommt, durchzuführenden Vergleich zwischen jeder dem jeweiligen Batteriemodul zugeordneten dritten Differenz und dem ersten Spannungsgrenzwert, der insbesondere 100 mV beträgt. Mittels des Vergleiches kann für jedes Batteriemodul, dessen Entladezeitpunkt während des ersten Tages vorkommt, festgestellt werden, ob eine zu dem fünften Zeitpunkt an dem jeweiligen Batteriemodul anliegende Spannung einer kleinsten der an den Batteriemodulen anliegenden Spannungen entspricht oder gleich einer kleinsten der an sonstiger Batteriemodule anliegenden Spannungen ist. Mit anderen Worten kann mittels des Vergleichs für jedes Batteriemodul, dessen Entladezeitpunkt während des ersten Tages vorkommt, festgestellt werden, ob ein über den zugeordneten Lastwiderstad während des ersten Tages erfolgtes Entladen des jeweiligen Batteriemoduls den gewünschten Effekt bewirkt hat. Ein Durchführen dieses Vergleichs ist vor allem dann wichtig, wenn jedes während des ersten Tages über den zugeordneten Lastwiderstand zu entladene Batteriemodul zu einem während des ersten Tages vorkommenden Zeitpunkt entladen wurde, zu dem jedes Batteriemodul einen zwischen 0, 15 und 0.9 liegenden und folglich mittleren Ladezustand aufweist. Wie zuvor schon erwähnt wurde, ist die bei mittleren Ladezuständen vorkommende Steigung der Spannung-Ladezustands-Kennlinie jedes Batteriemoduls klein, so dass große Unterschiede zwischen den Ladezuständen der Batteriemodule zu kleinen Unterschieden zwischen den an den Batteriemodulen anliegenden Spannungen führen.

Ein weiterer Aspekt der Erfindung betrifft eine Vorrichtung zum Durchführen eines zuvor beschriebenen Verfahrens mit den Merkmalen des Anspruchs 11. Dabei umfasst die Vorrichtung eine Erfassungseinheit, eine Auswerteeinheit und eine Steuereinheit. Ferner ist jedem Batteriemodul jeweils ein von mehreren mittels der Steuereinheit steuerbaren Schaltern zugeordnet, über den das jeweilige Batteriemodul parallel zu dem diesem zugeordneten Lastwiderstand schaltbar ist. Die Erfassungseinheit ist dazu ausgebildet, Parameterwerte wenigstens eines Betriebsparameters jedes Batteriemoduls zu erfassen und der Auswerteeinheit bereitzustellen. Die Auswerteeinheit ist dazu ausgebildet, jedes der Batteriemodule, welches über den diesem zugeordneten Lastwiderstand zu entladen ist, anhand der bereitgestellten Parameterwerte zu identifizieren. Die Auswerteeinheit ist weiter dazu ausgebildet, den zu dem ersten Zeitpunkt vorkommenden Ladezustand jedes Batteriemoduls oder jedes identifizierten Batteriemoduls und/oder die erste Energiemenge und/oder die zweite Energiemenge anhand der bereitgestellten Parameterwerte und/oder weiterer Daten zu bestimmen. Die Auswerteeinheit ist weiter dazu ausgebildet, jede einem Batteriemodul oder einem identifizierten Batteriemodul zugeordnete erste Auswertung durchzuführen. Die Auswerteeinheit ist weiter dazu ausgebildet, für jedes identifizierte Batteriemodul anhand der diesem zugeordneten ersten Auswertung zu bestimmen, ob dessen Entladezeitpunkt während des ersten Tages vorkommt. Die Auswerteeinheit ist weiter dazu ausgebildet, für jedes identifizierte Batteriemodul, dessen Entladezeitpunkt während des ersten Tages vorkommt, ein dem jeweiligen Batteriemodul zugeordnetes Steuerungssignal zu dem Entladezeitpunkt des jeweiligen Batteriemoduls zu erzeugen und der Steuereinheit bereitzustellen. Die Steuereinheit ist dazu ausgebildet, beim Vorliegen jedes einem identifizierten Batteriemodul zugeordneten Steuerungssignals den dem jeweiligen identifizierten Batteriemodul zugeordneten Schalter für einen Entladezeitraum zu schließen.

### Kurze Beschreibung der Zeichnungen

Nachfolgend werden Ausführungsbeispiele der Erfindung unter Bezugnahme auf die begleitenden Zeichnungen im Detail beschrieben. Für gleiche Komponenten und Parameter werden jeweils gleiche Bezugszeichen verwendet. Jede Komponente und jeder Parameter werden jeweils einmalig eingeführt und bei Wiederholung jeweils als schon bekannt behandelt, unabhängig davon, auf welche Zeichnung oder auf welches Ausführungsbeispiel sich ein jeweils entsprechender Beschreibungsteil, in dem die entsprechende Komponente oder der entsprechende Parameter wiederholt vorkommt, bezieht. In den Zeichnungen ist:
- Figur 1: eine Anordnung mit einer Batterie mit mehreren in Reihe geschalteten Batteriemodulen und einer gemäß einer ersten Ausführungsform der Erfindung ausgebildeten Vorrichtung zum Ausgleichen von Ladezuständen der Batteriemodule; und
- Figur 2: eine Spannung-Ladezustands-Kennlinie, die für jedes der Batteriemodule der Batterie charakteristisch ist.

### Ausführungsform der Erfindung

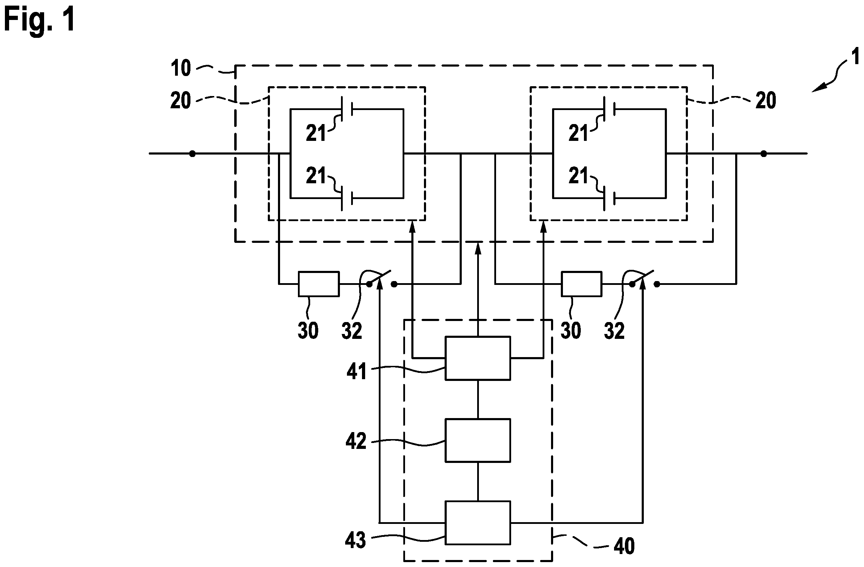

Figur 1 zeigt eine Anordnung 1 mit einer Batterie 10 mit mehreren in Reihe geschalteten Batteriemodulen 20. Zur Vereinfachung der Darstellung wurden in der Figur 1 beispielhaft nur zwei der Batteriemodule 20 gezeichnet. Ein jedes der Batteriemodule 20 umfasst mehrere parallel zueinander geschaltete Batteriezellen 21. Zur Vereinfachung der Darstellung wurden in der Figur 1 beispielhaft nur zwei Batteriezellen 21 pro Batteriemodul 20 gezeichnet. Die Batterie 10 ist dazu vorgesehen, einen Verbraucher (nicht dargestellt) mit elektrischer Energie zu versorgen und elektrische Energie, die von einer stationären Energieumwandlungsanlage (nicht dargestellt) durch Umwandeln von erneuerbarer Energie erzeugt wird, zu speichern. Der Verbraucher stellt hier zum Beispiel den Haushalt eines Haushaltes dar. Die stationäre Energieumwandlungsanlage ist zum Beispiel eine Photovoltaikanlage, die Solarenergie in elektrische Energie umwandelt.

Die Anordnung 1 umfasst mehrere jeweils einem der Batteriemodule 20 zugeordnete Lastwiderstände 30 und mehrere jeweils einem der Batteriemodule 20 zugeordnete Schalter 32. Die Schalter 32 können jeweils in Form eines MOSFETs ausgebildet sein. Zur Vereinfachung der Darstellung wurden in der Figur 1 nur die zwei der Lastwiderstände 30 und der Schalter 32, die der zwei dargestellten Batteriemodule 20 zugeordnet sind, gezeichnet. Jedes Batteriemodul 20 ist über den diesem zugeordneten Schalter 32 parallel zu dem diesen zugeordneten Lastwiederstand 30 schaltbar. Zum Ausgleichen von Ladezuständen der Batteriemodule 20 kann jedes Batteriemodul 20 über den diesem zugeordneten Lastwiderstand 30 entladen werden.

Die Anordnung 1 umfasst eine gemäß einer ersten Ausführungsform der Erfindung ausgebildete Vorrichtung 40 zum Ausgleichen der Ladezustände der Batteriemodule 20.

Die Vorrichtung 40 umfasst eine Erfassungseinheit 41, eine Auswerteeinheit 42 und eine Steuereinheit 43. Die Erfassungseinheit 41 ist dazu ausgebildet, Parameterwerte wenigstens eines Betriebsparameters jedes Batteriemoduls 20 und weitere Parameterwerte wenigstens eines weiteren Betriebsparameters der Batterie 10 zu erfassen und der Auswerteeinheit 42 bereitzustellen.

Die Parameterwerte umfassen erste Parameterwerte, die einen zu einem ersten Zeitpunkt eines ersten Tages vorkommenden Wert einer jeden an einem der Batteriemodule 20 anliegenden Spannung enthalten. Die Auswerteeinheit 42 ist dazu ausgebildet, einen zu dem ersten Zeitpunkt vorkommenden Ladezustand jedes Batteriemoduls 20 anhand der ersten Parameterwerte zu bestimmen. Der erste Zeitpunkt ist zum Beispiel 12 Uhr mittags oder liegt in einem sich symmetrisch um 12 Uhr mittags erstreckenden ersten Zeitraum, der zum Beispiel eine zwischen 1 und 6 liegende natürliche Anzahl von Stunden umfasst.

Alternativ oder zusätzlich ist die Auswerteeinheit 42 dazu ausgebildet, eine erste elektrische Energiemenge, die während des ersten Tages von der Energieumwandlungsanlage der Batterie 10 voraussichtlich zuführbar ist, anhand von weiteren Daten zu bestimmen. Dazu umfasst die Auswerteeinheit 42 eine Kommunikationsschnittstelle (nicht dargestellt), über welche die Auswerteeinheit 42 mit einem Kommunikationsnetzwerk (nicht dargestellt), wie zum Beispiel dem Internet, verbindbar ist. Die Auswerteeinheit 42 ist weiter dazu ausgebildet, zu einem während des ersten Tages vor dem ersten Zeitpunkt vorkommenden zweiten Zeitpunkt Wetterdaten über die Kommunikationsschnittstelle abzurufen und die erste Energiemenge anhand der Wetterdaten zu bestimmen. Die Wetterdaten stellen zumindest einen Teil der weiteren Daten dar.

Alternativ oder zusätzlich ist die Auswerteeinheit 42 dazu ausgebildet, eine zweite Energiemenge, die während des ersten Tages von der Batterie 10 dem Verbraucher voraussichtlich zuzuführen ist, anhand der weiteren Daten zu bestimmen. Hierbei umfassen die weiteren Parameterwerte erste weitere Parameterwerte, die zumindest einen Teil der weiteren Daten darstellen und mehrere während eines jeden Tages eines zweiten Zeitraumes vorkommende Werte einer an der Batterie 10 anliegenden Spannung und eines durch die Batterie 10 fließenden Stromes enthalten. Der zweite Zeitraum umfasst wenigstens zwei unmittelbar aufeinander folgende Tage und liegt unmittelbar vor dem ersten Tag. Ferner ist die Auswerteeinheit 42 dazu ausgebildet, eine jede dritte Energiemenge, die während eines Tages des zweiten Zeitraumes von der Batterie 10 dem Verbraucher zugeführt wird, anhand der weiteren ersten Parameterwerte zu bestimmen. Dabei ist die Auswerteeinheit 42 weiter dazu ausgebildet, die zweite Energiemenge anhand jeder dritten Energiemenge, insbesondere als arithmetischer Durchschnitt der dritten Energiemengen, zu bestimmen.

Die Parameterwerte umfassen zweite Parameterwerte, die einen zu einem dritten Zeitpunkt vorkommenden Wert einer jeden an einem der Batteriemodule 20 anliegenden Spannung enthalten. Dabei ist die Auswerteeinheit 41 dazu ausgebildet, jedes der Batteriemodule 20, für welches eine zu dem dritten Zeitpunkt vorkommende erste Differenz zwischen der an dem jeweiligen Batteriemodul 20 anliegenden Spannung und der an einem anderen der Batteriemodule 20 anliegenden Spannung einen ersten Spannungsgrenzwert überschreitet, anhand der zweiten Parameterwerte zu erkennen. Insbesondere beträgt der erste Spannungsgrenzwert 100 mV. Die Auswerteeinheit 41 ist weiter dazu ausgebildet, jedes anhand der zweiten Parameterwerte erkannte Batteriemodul 20 als ein Batteriemodul 20 zu identifizieren, welches zum Ausgleichen der Ladezustände der Batteriemodule 20 über den diesem zugeordneten Lastwiderstand 30 zu entladen ist.

Alternativ oder zusätzlich umfassen die Parameterwerte dritte Parameterwerte. Die dritte Parameterwerte enthalten einen zu einem dritten Zeitpunkt vorkommenden Wert einer jeden Anzahl von Lade- und Entladezyklen, die ein der Batteriemodule 20 seit einem Zeitpunkt, zu dem das jeweilige Batteriemodul 20 über den diesem zugeordneten Lastwiderstand 30 zuletzt entladen wurde, bis zu dem dritten Zeitpunkt erfahren hat. Dabei ist die Auswerteeinheit 42 dazu ausgebildet, jedes der Batteriemodule 20, für welches die erfahrene Anzahl von Lade- und Entladezyklen einen ersten Zahlengrenzwert überschreitet, anhand der dritten Parameterwerte zu erkennen. Die Auswerteeinheit 41 ist weiter dazu ausgebildet, jedes anhand der dritten Parameterwerte erkannte Batteriemodul 20 als ein Batteriemodul 20 zu identifizieren, welches zum Ausgleichen der Ladezustände der Batteriemodule 20 über den diesem zugeordneten Lastwiderstand 30 zu entladen ist.

Die Auswerteeinheit 42 ist weiter dazu ausgebildet, für jedes Batteriemodul 20 einen diesem zuführbaren ersten Anteil der ersten Energiemenge anhand der ersten Energiemenge und einer Anzahl der Batteriemodule 20 zu bestimmen. Die Auswerteeinheit 42 ist weiter dazu ausgebildet, für jedes Batteriemodul 20 einen von diesem zuzuführenden zweiten Anteil der zweiten Energiemenge anhand der zweiten Energiemenge und der Anzahl der Batteriemodule zu bestimmen. Die Auswerteeinheit 42 ist weiter dazu ausgebildet, für jedes Batteriemodul 20 eine zu dem ersten Zeitpunkt in diesem gespeicherten Energiemenge anhand seines zu dem ersten Zeitpunkt vorkommenden Ladezustands zu bestimmen. Die Auswerteeinheit 42 ist weiter dazu ausgebildet, für jedes Batteriemodul 20 eine Überschussenergiemenge durch Subtrahieren des von diesem zuzuführenden zweiten Anteils von einer Summe des diesem zuführbaren ersten Anteils und der in diesem zu der ersten Zeitpunkt gespeicherten Energiemenge zu bestimmen.

Die Auswerteeinheit 42 ist weiter dazu ausgebildet, einen Entladezeitpunkt jedes identifizierten Batteriemoduls 20, dessen Überschussenergiemenge positiv ist, als ein während des ersten Tages vorkommender Zeitpunkt auszuwählen. Die Auswerteeinheit 42 ist weiter dazu ausgebildet, den Entladezeitpunkt jedes identifizierten Batteriemoduls 20, dessen Überschussenergiemenge gleich Null oder negativ ist, auf einen nach dem ersten Tag folgenden Tag zu verschieben.

Alternativ ist die Auswerteeinheit 42 dazu ausgebildet, den Entladezeitpunkt jedes identifizierten Batteriemoduls 20, dessen zu dem ersten Zeitpunkt vorkommender Ladezustand einen ersten Ladezustandsgrenzwert von zum Beispiel 0.7 überschreitet, als ein während des ersten Tages vorkommender Zeitpunkt auszuwählen. Dabei ist die Auswerteeinheit 42 weiter dazu ausgebildet, den Entladezeitpunkt jedes identifizierten Batteriemoduls 20, dessen zu dem ersten Zeitpunkt vorkommender Ladezustand den ersten Ladezustandsgrenzwert erreicht oder unterschreitet, auf einen nach dem ersten Tag folgenden Tag zu verschieben.

Alternativ oder zusätzlich ist die Auswerteeinheit 42 dazu ausgebildet, den Entladezeitpunkt jedes identifizierten Batteriemoduls 20 als ein während des ersten Tages vorkommender Zeitpunkt auszuwählen, wenn die zweite oder jede dritte Energiemenge einen ersten Energiemengengrenzwert erreicht oder unterschreitet. Ferner ist die Auswerteeinheit bevorzugt dazu ausgebildet, den Entladezeitpunkt jedes identifizierten Batteriemoduls 20 mittels der Überschussenergiemenge oder des zu dem ersten Zeitpunkt vorkommenden Ladezustands des jeweiligen Batteriemoduls 20 in einer weiter oben beschriebenen Weise zu bestimmen, wenn die zweite oder jede dritte Energiemenge den ersten Energiemengengrenzwert überschreitet.

Die Auswerteeinheit 42 ist weiter dazu ausgebildet, den Entladezeitpunkt jedes Batteriemoduls 20, welches während des ersten Tages über den diesem zugeordneten Lastwiderstand 30 zu entladen ist, als ein Zeitpunkt, der während des ersten Tages in einem ersten Zustand der Batterie 10 vorkommt, auszuwählen. In dem ersten Zustand der Batterie 10 weist jedes Batteriemodul 20 einen Ladezustand auf, der einen zweiten Ladezustandsgrenzwert von zum Beispiel 0,9 überschreitet.

Die Auswerteeinheit 42 ist weiter dazu ausgebildet, für jedes identifizierte Batteriemodul 20, dessen Entladezeitpunkt während des ersten Tages vorkommt, ein dem jeweiligen Batteriemodul 20 zugeordnetes Steuerungssignal zu dem Entladezeitpunkt des jeweiligen Batteriemoduls 20 zu erzeugen und der Steuereinheit 43 bereitzustellen. Die Steuereinheit 43 ist dazu ausgebildet, beim Vorliegen jedes einem identifizierten Batteriemodul 20 zugeordneten Steuerungssignals den dem jeweiligen Batteriemodul 20 zugeordneten Schalter 32 für einen Entladezeitraum zu schließen. Jeder während des ersten Tages vorkommende Entladezeitraum eines identifizierten der Batteriemodule 20 wird so ausgewählt, dass dieses solange über den zugeordneten Lastwiderstand 30 entladen wird, bis sein Ladezustand einem kleinsten Ladezustand der Batteriemodule 20 entspricht oder gleich einem kleinsten Ladezustand sonstiger Batteriemodule 20 ist.

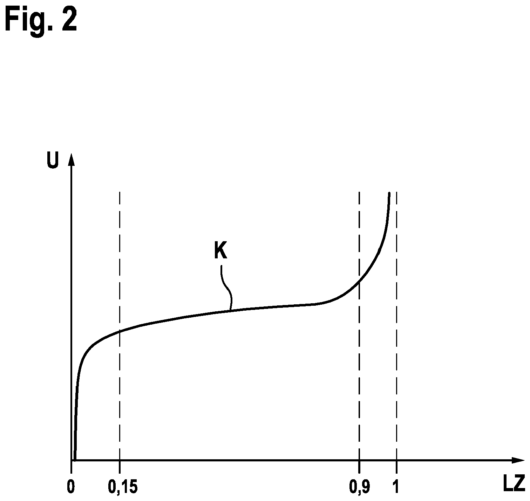

Die Erfassungseinheit 41, die Auswerteeinheit 42 und die Steuereinheit können gemeinsam in der Batterie 10 oder Energieumwandlungsanlage eingebaut sein. Alternativ kann die Auswerteeinheit 42 ein Webserver sein, der nicht in der Batterie 10 oder der Energieumwandlungsanlage eingebaut und mit der Erfassungseinheit 41 und der Steuereinheit 43 über eine beispielsweise in Form einer Webschnittstelle ausgebildete Kommunikationsschnittstelle verbindbar ist. Hierbei zu berücksichtigen ist, dass jedes Batteriemodul 20 eine Spannung-Ladezustands-Kennlinie K aufweist, deren Steigung stark von einem Wertebereich, in dem der Ladezustand des jeweiligen Batteriemoduls 20 liegt, abhängig ist. Eine solche Kennlinie K ist in der Figur 2 dargestellt und gibt einen Verlauf einer an einem der Batteriemodule 20 anliegenden Spannung in Abhängigkeit von einem Ladezustand des jeweiligen Batteriemoduls 20 an. In der Figur 2 ist mit U eine Achse bezeichnet, die Spannungswerte angibt. In der Figur 2 ist mit LZ eine Achse bezeichnet, die Ladezustandswerte angibt. Jedes Batteriemodul 20 kann einen zwischen 0 und 1 liegenden Ladezustand aufweisen. Aus der Figur 2 ist ersichtlich, dass die Kennlinie K jedes Batteriemoduls 20 für kleine Ladezustände, die beispielsweise unterhalb von 0,15 liegen, und für hohe Ladezustände, die beispielweise oberhalb von 0,9 liegen, eine sehr große Steigung aufweist. Aus der Figur 2 ist ferner ersichtlich, dass die Kennlinie K jedes Batteriemoduls 20 für mittlere Ladezustände, die beispielsweise zwischen 0,15 und 0,9 liegen, eine relativ kleine Steigung aufweist. Das bedeutet, dass für kleine und große Ladezustände eine vordefinierte Änderung eines Ladezustands jedes Batteriemoduls 20 zu einer Änderung der an dem jeweiligen Batteriemodul 20 anliegenden Spannung führt, die deutlich größer als eine entsprechende Änderung ist, die für mittlere Ladezustände vorkommt.

In dem ersten Zustand der Batterie 10 weist jedes Batteriemodul 20 einen insbesondere oberhalb von 0.9 liegenden und folglich großen Ladezustand auf. Da in einem solchen Fall die Steigung der Kennlinie K jedes Batteriemoduls 20 sehr groß ist, kann beim Entladen der während des ersten Zustands über die zugeordneten Lastwiderstände 30 zu entladenden Batteriemodule 20 mittels der Erfassungseinheit 41 eine genaue Messung von an den Batteriemodulen 20 anliegenden Spannungen durchgeführt werden. Da während dieser Messung die Steigung der Kennlinie K jedes Batteriemoduls 20 sehr groß ist, führen bereits kleine Unterschiede zwischen den Ladezuständen der Batteriemodule 20 zu sehr großen Unterschieden zwischen den an den Batteriemodulen 20 anliegenden Spannungen. Folglich kann die Auswerteeinheit 42 anhand dieser Messung ein Zeitpunkt, zu dem die an einem sich über den zugeordneten Lastwiderstand 30 entladenden Batteriemodul 20 anliegende Spannung einer kleinsten der an den Batteriemodulen 20 anliegenden Spannungen entspricht oder gleich einer kleinsten der an den sonstigen Batteriemodule 20 anliegenden Spannungen ist, sehr genau bestimmen. Mit anderen Worten kann die Auswerteeinheit 42 anhand dieser Messung den Entladezeitraum jedes während des ersten Tages über den zugeordneten Lastwiderstand 30 zu entladenden Batteriemoduls 20 sehr genau bestimmen.

Neben der voranstehenden schriftlichen Offenbarung wird hiermit zur weiteren Offenbarung der Erfindung ergänzend auf die Darstellung in den Figuren 1 und 2 Bezug genommen.

## Patentansprüche

1. Verfahren zum Ausgleichen von Ladezuständen mehrerer in Reihe geschalteter Batteriemodule (20) einer Batterie (10) zum Versorgen eines Verbrauchers mit elektrischer Energie und zum Speichern von elektrischer Energie, die von einer stationären Energieumwandlungsanlage durch Umwandeln von erneuerbarer Energie erzeugt wird, umfassend:
Identifizieren eines jeden der Batteriemodule (20), das zum Ausgleichen der Ladezustände über einen diesem zugeordneten Lastwiderstand (30) zu entladen ist;
Durchführen für jedes identifizierte Batteriemodul (20) einer diesem zugeordneten und zu einem ersten Zeitpunkt eines ersten Tages stattfindenden ersten Auswertung eines zu dem ersten Zeitpunkt vorkommenden Ladezustands des jeweiligen Batteriemoduls (20) und/oder einer ersten elektrischen Energiemenge, die während des ersten Tages von der Energieumwandlungsanlage der Batterie (10) voraussichtlich zuführbar ist und/oder einer zweiten elektrischen Energiemenge, die während des ersten Tages von der Batterie (10) dem Verbraucher voraussichtlich zuzuführen ist; und
Bestimmen für jedes identifizierte Batteriemodul (20) anhand der diesem zugeordneten ersten Auswertung ob ein Entladezeitpunkt, zu dem das jeweilige Batteriemodul (20) über den diesem zugeordneten Lastwiderstand (30) entladen wird, während des ersten Tages vorkommt;
gekennzeichnet entweder durch:
Bestimmen für jedes identifizierte Batteriemodul (20) eines diesem zuführbaren ersten Anteils der ersten Energiemenge anhand der ersten Energiemenge und einer Anzahl der Batteriemodule (20), eines von diesem Batteriemodul (20) zuzuführenden zweiten Anteils der zweiten Energiemenge anhand der zweiten Energiemenge und der Anzahl der Batteriemodule (20) und einer zu dem ersten Zeitpunkt in diesem Batteriemodul (20) gespeicherten Energiemenge anhand seines zu dem ersten Zeitpunkt vorkommenden Ladezustands;
Bestimmen für jedes identifizierte Batteriemodul (20) einer Überschussenergiemenge durch Subtrahieren des von dem jeweiligen Batteriemodul (20) zuzuführenden zweiten Anteils von einer Summe des dem jeweiligen Batteriemodul (20) zuführbaren ersten Anteil und der in dem jeweiligen Batteriemodul (20) zu dem ersten Zeitpunkt gespeicherten Energiemenge;
Auswählen des Entladezeitpunktes jedes identifizierten Batteriemoduls (20), dessen Überschussenergiemenge positiv ist, als ein während des ersten Tages vorkommender Zeitpunkt; und
Verschieben des Entladezeitpunktes jedes identifizierten Batteriemoduls (20), dessen Überschussenergiemenge gleich Null oder negativ ist, auf einen nach dem ersten Tag folgenden Tag;
oder durch:
Vergleichen des zu dem ersten Zeitpunkt vorkommenden Ladezustands jedes identifizierten Batteriemoduls (20) mit einem ersten Ladezustandsgrenzwert;
Auswählen des Entladezeitpunktes jedes identifizierten Batteriemoduls (20), dessen zu dem ersten Zeitpunkt vorkommender Ladezustand den ersten Ladezustandsgrenzwert überschreitet, als ein während des ersten Tages vorkommender Zeitpunkt; und
Verschieben des Entladezeitpunktes jedes identifizierten Batteriemoduls (20), dessen zu dem ersten Zeitpunkt vorkommender Ladezustand den ersten Ladezustandsgrenzwert erreicht oder unterschreitet, auf einen nach dem ersten Tag folgenden Tag.

2. Verfahren nach Anspruch 1, **dadurch gekennzeichnet, dass** der erste Zeitpunkt 12 Uhr mittags ist oder in einem sich symmetrisch um 12 Uhr mittags erstreckenden ersten Zeitraum liegt, wobei der erste Zeitraum eine zwischen 1 und 6 liegende natürliche Anzahl von Stunden umfasst.

3. Verfahren nach einem der vorangehenden Ansprüche, **gekennzeichnet durch**:
Durchführen zu einem während des ersten Tages vor dem ersten Zeitpunkt vorkommenden zweiten Zeitpunkt eines online Abrufens von Wetterdaten; und
Bestimmen der ersten Energiemenge anhand der Wetterdaten.

4. Verfahren nach einem der Ansprüche 1 bis 3, **dadurch gekennzeichnet, dass** der erste Ladezustandsgrenzwert 0,7 beträgt.

5. Verfahren nach einem der vorangehenden Ansprüche, **gekennzeichnet durch**:
Bestimmen während eines jeden Tages eines zweiten Zeitraumes einer dritten Energiemenge, die während des jeweiligen Tages von der Batterie (10) dem Verbraucher zugeführt wird, und
Bestimmen der zweiten Energiemenge anhand jeder bestimmten dritten Energiemenge, wobei der zweite Zeitraum unmittelbar vor dem ersten Tag liegt und wenigstens zwei unmittelbar aufeinander folgende Tage umfasst.

6. Verfahren nach Anspruch 5, **gekennzeichnet durch**:
Vergleichen der zweiten oder jeder dritten Energiemenge mit einem ersten Energiemengengrenzwert;
Auswählen des Entladezeitpunktes jedes identifizierten Batteriemoduls (20) als ein während des ersten Tages vorkommender Zeitpunkt, wenn die zweite oder jede dritte Energiemenge den ersten Energiemengengrenzwert erreicht oder unterschreitet; und
Durchführen eines Verfahrens nach Anspruch 1, wenn die zweite oder jede dritte Energiemenge den ersten Energiemengengrenzwert überschreitet.

7. Verfahren nach einem der vorangehenden Ansprüche, **gekennzeichnet durch**:
Durchführen zu einem vor dem ersten Zeitpunkt vorkommenden oder zu einem während des ersten Tages nach dem ersten Zeitpunkt vorkommenden dritten Zeitpunkt eines ersten Erkennens jedes der Batteriemodule (20), für welches eine diesem zugeordnete erste Differenz zwischen einer an dem jeweiligen Batteriemodul (20) zu dem dritten Zeitpunkt anliegenden Spannung und einer an einem anderen der Batteriemodule (20) zu dem dritten Zeitpunkt anliegenden Spannung einen ersten Spannungsgrenzwert überschreitet und/oder welches seit einem Zeitpunkt, zu dem das jeweilige Batteriemodul (20) über den diesem zugeordneten Lastwiderstand (30) zuletzt entladen wurde, bis zu dem dritten Zeitpunkt eine einen ersten Zahlengrenzwert überschreitende Anzahl von Lade- und Entladezyklen erfahren hat, wobei jedes mittels des ersten Erkennens erkannte Batteriemodul (20) jeweils einem identifizierten der Batteriemodule (20) entspricht, das über den diesem zugeordneten Lastwiderstand (30) zu entladen ist, wobei der erste Spannungsgrenzwert insbesondere 100 mV beträgt.

8. Verfahren nach Anspruch 7, **dadurch gekennzeichnet, dass** der dritte Zeitpunkt während eines unmittelbar vor dem ersten Tag liegenden Tages vorkommt und jedes Batteriemodul (20) zu dem dritten Zeitpunkt einen Ladezustand aufweist, der einen zweiten Ladezustandsgrenzwert überschreitet, wobei der zweite Ladezustandsgrenzwert insbesondere 0,9 beträgt.

9. Verfahren nach Anspruch 7 oder 8, **gekennzeichnet durch**:
Durchführen zu einem während des ersten Tages vorkommenden vierten Zeitpunkt eines zweiten Erkennens jedes Batteriemoduls (20), für welches eine diesem zugeordnete zweite Differenz zwischen einer an dem jeweiligen Batteriemodul (20) zu dem vierten Zeitpunkt anliegenden Spannung und einer an einem anderen der Batteriemodule (20) zu dem vierten Zeitpunkt anliegenden Spannung einen gegenüber dem ersten Spannungsgrenzwert größeren zweiten Spannungsgrenzwert überschreitet und/oder welches seit einem Zeitpunkt, zu dem das jeweilige Batteriemodul (20) über den diesem zugeordneten Lastwiderstand (30) zuletzt entladen wurde, bis zu dem vierten Zeitpunkt eine einen gegenüber dem ersten Zahlengrenzwert größeren zweiten Zahlengrenzwert überschreitende Anzahl von Lade- und Entladezyklen erfahren hat, und
Auswählen für jedes mittels des zweiten Erkennens erkannte Batteriemodul (20) eines während des ersten Tages vorkommenden Entladezeitpunktes, zu dem das jeweilige Batteriemodul (20) über den diesem zugeordneten Lastwiderstand entladen wird.

10. Verfahren nach einem der vorangehenden Ansprüche, **gekennzeichnet durch**:
Auswählen des Entladezeitpunktes jedes Batteriemoduls (20), welches während des ersten Tages über den diesem zugeordneten Lastwiderstand (30) zu entladen ist, als ein Zeitpunkt, der während des ersten Tages in einem ersten Zustand der Batterie (10) vorkommt, in dem jedes Batteriemodul (20) einen Ladezustand aufweist, der einen zweiten Ladezustandsgrenzwert überschreitet oder in einem einen Ladezustandswert von 0,5 umfassenden ersten Ladezustandswertebereich liegt, wobei der zweite Ladezustandsgrenzwert insbesondere 0,9 beträgt oder sich der erste Ladezustandswertebereich insbesondere zwischen 0,15 und 0,9 erstreckt.

11. Vorrichtung (40) zum Durchführen eines Verfahrens nach einem der vorangehenden Ansprüche, wobei die Vorrichtung (40) eine Erfassungseinheit (41), eine Auswerteeinheit (42) und eine Steuereinheit (43) umfasst, wobei jedem Batteriemodul (20) jeweils ein von mehreren mittels der Steuereinheit (43) steuerbaren Schaltern (32) zugeordnet ist, über den das jeweilige Batteriemodul (20) parallel zu dem diesem zugeordneten Lastwiderstand (30) schaltbar ist, wobei die Erfassungseinheit (41) dazu ausgebildet ist, Parameterwerte wenigstens eines Betriebsparameters jedes Batteriemoduls (20) zu erfassen und der Auswerteeinheit (42) bereitzustellen, wobei die Auswerteeinheit (42) dazu ausgebildet ist, jedes der Batteriemodule (20), welches über den diesem zugeordneten Lastwiderstand (30) zu entladen ist, anhand der bereitgestellten Parameterwerte zu identifizieren, den zu dem ersten Zeitpunkt vorkommenden Ladezustand jedes Batteriemoduls (20) oder jedes identifizierten Batteriemoduls (20) und/oder die erste Energiemenge und/oder die zweite Energiemenge anhand der bereitgestellten Parameterwerte und/oder weiterer Daten zu bestimmen, jede einem Batteriemodul (20) oder einem identifizierten Batteriemodul (20) zugeordnete erste Auswertung durchzuführen, für jedes identifizierte Batteriemodul (20) anhand der diesem zugeordneten ersten Auswertung zu bestimmen, ob dessen Entladezeitpunkt während des ersten Tages vorkommt, und für jedes identifizierte Batteriemodul (20), dessen Entladezeitpunkt während des ersten Tages vorkommt, ein dem jeweiligen Batteriemodul (20) zugeordnetes Steuerungssignal zu dem Entladezeitpunkt des jeweiligen Batteriemoduls (20) zu erzeugen und der Steuereinheit (43) bereitzustellen, wobei die Steuereinheit (43) dazu ausgebildet ist, beim Vorliegen jedes einem identifizierten Batteriemodul (20) zugeordneten Steuerungssignals den dem jeweiligen Batteriemodul (20) zugeordneten Schalter (32) für einen Entladezeitraum zu schließen, wobei die Vorrichtung zum Durchführen eines Verfahrens nach einem der vorangehenden Ansprüche eingerichtet ist.

## Claims

1. Method for balancing states of charge of a plurality of series-connected battery modules (20) of a battery (10) for supplying electrical energy to a consumer and for storing electrical energy that is generated by a stationary energy conversion facility by converting renewable energy, comprising:
identifying any of the battery modules (20) that need to be discharged via a load resistor (30) associated therewith in order to balance the states of charge;
for each identified battery module (20), performing a first evaluation, associated therewith and taking place at a first time of a first day, of a state of charge of the respective battery module (20) occurring at the first time and/or a first amount of electrical energy that is provisionally able to be supplied to the battery (10) by the energy conversion facility during the first day and/or a second amount of electrical energy that should provisionally be supplied to the consumer by the battery (10) during the first day; and
for each identified battery module (20), determining, on the basis of the first evaluation associated therewith, whether a discharge time at which the respective battery module (20) is discharged via the load resistor (30) associated therewith occurs during the first day;
characterized either by:
for each identified battery module (20), determining a first portion, able to be supplied thereto, of the first amount of energy on the basis of the first amount of energy and a number of the battery modules (20), a second portion, able to be supplied by this battery module (20), of the second amount of energy on the basis of the second amount of energy and the number of the battery modules (20) and an amount of energy stored in this battery module (20) at the first time on the basis of its state of charge occurring at the first time;
for each identified battery module (20), determining an excess amount of energy by subtracting the second portion to be supplied by the respective battery module (20) from a sum of the first portion able to be supplied to the respective battery module (20) and the amount of energy stored in the respective battery module (20) at the first time;
selecting the discharge time of each identified battery module (20) whose excess amount of energy is positive as a time occurring during the first day; and
shifting the discharge time of each identified battery module (20) whose excess amount of energy is equal to zero or negative to a day following the first day;
or by:
comparing the state of charge of each identified battery module (20) occurring at the first time with a first state of charge limit value;
selecting the discharge time of each identified battery module (20) whose state of charge occurring at the first time exceeds the first state of charge limit value as a time occurring during the first day; and
shifting the discharge time of each identified battery module (20) whose state of charge occurring at the first time reaches or falls below the first state of charge limit value to a day following the first day.

2. Method according to Claim 1, **characterized in that** the first time is 12 p.m. or lies in a first time interval extending symmetrically about 12 p.m., wherein the first time interval comprises a natural number of hours of between 1 and 6.

3. Method according to either of the preceding claims, **characterized by**:
at a second time occurring during the first day before the first time, retrieving weather data online; and
determining the first amount of energy on the basis of the weather data.

4. Method according to one of Claims 1 to 3, **characterized in that** the first state of charge limit value is 0.7.

5. Method according to one of the preceding claims, **characterized by**:
during each day of a second time interval, determining a third amount of energy that is supplied to the consumer by the battery (10) during the respective day, and
determining the second amount of energy on the basis of each determined third amount of energy, wherein the second time interval lies immediately before the first day and comprises at least two immediately consecutive days.

6. Method according to Claim 5, **characterized by**:
comparing the second or each third amount of energy with a first energy limit value;
selecting the discharge time of each identified battery module (20) as a time occurring during the first day when the second or each third amount of energy reaches or falls below the first amount of energy limit value; and
performing a method according to Claim 1 when the second or each third amount of energy exceeds the first amount of energy limit value.

7. Method according to one of the preceding claims, **characterized by**:
at a third time occurring before the first time or occurring during the first day after the first time, performing a first detection of each of the battery modules (20) for which a first difference associated therewith between a voltage present on the respective battery module (20) at the third time and a voltage present on another of the battery modules (20) at the third time exceeds a first voltage limit value and/or that has experienced a number of charge and discharge cycles that exceeds a first number limit value since a time at which the respective battery module (20) was last discharged via the load resistor (30) associated therewith until the third time, wherein each battery module (20) detected by way of the first detection in each case corresponds to an identified one of the battery modules (20) that needs to be discharged via the load resistor (30) associated therewith, wherein the first voltage limit value is in particular 100 mV.

8. Method according to Claim 7, **characterized in that** the third time occurs during a day immediately before the first day and each battery module (20), at the third time, has a state of charge that exceeds a second state of charge limit value, wherein the second state of charge limit value is in particular 0.9.

9. Method according to Claim 7 or 8, **characterized by**:
at a fourth time occurring during the first day, performing a second detection of each battery module (20) for which a second difference associated therewith between a voltage present on the respective battery module (20) at the fourth time and a voltage present on another of the battery modules (20) at the fourth time exceeds a second voltage limit value greater than the first voltage limit value and/or that has experienced a number of charge and discharge cycles that exceeds a second number limit value, greater than the first number limit value, since a time at which the respective battery module (20) was last discharged via the load resistor (30) associated therewith until the fourth time, and for each battery module (20) detected by way of the second detection, selecting a discharge time occurring during the first day at which the respective battery module (20) is discharged via the load resistor associated therewith.

10. Method according to one of the preceding claims, **characterized by**:
selecting the discharge time of each battery module (20) that should be discharged during the first day via the load resistor (30) associated therewith as a time that occurs during the first day in a first state of the battery (10) and in which each battery module (20) has a state of charge that exceeds a second state of charge limit value or lies in a first state of charge value range comprising a state of charge value of 0.5, wherein the second state of charge limit value is in particular 0.9 or the first state of charge value range extends in particular between 0.15 and 0.9.

11. Device (40) for performing a method according to one of the preceding claims, wherein the device (40) comprises a recording unit (41), an evaluation unit (42) and a control unit (43), wherein each battery module (20) has associated with it a respective one of a plurality of switches (32) able to be controlled by way of the control unit (43) and by way of which the respective battery module (20) is able to be connected in parallel with the load resistor (30) associated therewith, wherein the recording unit (41) is designed to record parameter values of at least one operating parameter of each battery module (20) and provide said parameter values to the evaluation unit (42), wherein the evaluation unit (42) is designed to identify each of the battery modules (20) that needs to be discharged via the load resistor (30) associated therewith on the basis of the provided parameter values, to determine the state of charge of each battery module (20) or each identified battery module (20) occurring at the first time and/or the first amount of energy and/or the second amount of energy on the basis of the provided parameter values and/or further data, to perform each first evaluation associated with a battery module (20) or an identified battery module (20), to determine, for each identified battery module (20), on the basis of the first evaluation associated therewith, whether the discharge time thereof occurs during the first day, and, for each identified battery module (20) whose discharge time occurs during the first day, to generate a control signal, associated with the respective battery module (20), at the discharge time of the respective battery module (20) and to provide said control signal to the control unit (43), wherein the control unit (43) is designed, when any control signal associated with an identified battery module (20) is present, to close the switch (32) associated with the respective battery module (20) for a discharge time interval, wherein the device is configured so as to perform a method according to one of the preceding claims.

## Revendications

1. Procédé d'équilibrage d'états de charge de plusieurs modules de batterie (20) d'une batterie (10) connectés en série pour fournir de l'énergie électrique à un consommateur et pour stocker de l'énergie électrique générée par un système de conversion d'énergie stationnaire par conversion d'énergie renouvelable, comprenant :
une identification de chacun des modules de batterie (20) qui doit être déchargé par le biais d'une résistance de charge (30) qui lui est associée pour l'équilibrage des états de charge ;
la mise en œuvre, pour chaque module de batterie (20) identifié, d'une première évaluation qui lui est associée et qui se produit à un premier instant d'un premier jour, d'un état de charge du module de batterie (20) respectif existant au premier instant et/ou d'une première quantité d'énergie électrique qui peut vraisemblablement être fournie à la batterie (10) par le système de conversion d'énergie pendant le premier jour et/ou d'une deuxième quantité d'énergie électrique qui peut vraisemblablement être fournie au consommateur par la batterie (10) pendant le premier jour ; et
une détermination, pour chaque module de batterie (20) identifié, sur la base de la première évaluation qui lui est associée, du fait qu'un instant de décharge auquel le module de batterie (20) respectif est déchargé par le biais de la résistance de charge (30) qui lui est associée se produit ou non pendant le premier jour ;
caractérisé soit par :
une détermination, pour chaque module de batterie (20) identifié, d'une première partie de la première quantité d'énergie qui peut lui être fournie sur la base de la première quantité d'énergie et d'un nombre de modules de batterie (20), d'une deuxième partie de la deuxième quantité d'énergie qui doit être fournie par ledit module de batterie (20) sur la base de la deuxième quantité d'énergie et du nombre de modules de batterie (20) et d'une quantité d'énergie stockée dans ledit module de batterie (20) au premier instant sur la base de son état de charge au premier instant ;
une détermination, pour chaque module de batterie (20) identifié, d'une quantité d'énergie excédentaire par soustraction de la deuxième partie, qui doit être fournie par le module de batterie (20) respectif, à une somme de la première partie qui peut être fournie au module de batterie (20) respectif et de la quantité d'énergie stockée dans le module de batterie (20) respectif au premier instant ;
une sélection de l'instant de décharge de chaque module de batterie (20) identifié dont l'énergie excédentaire est positive, en tant qu'instant se produisant pendant le premier jour ; et
un report de l'instant de décharge de chaque module de batterie (20) identifié dont la quantité d'énergie excédentaire est nulle ou négative à un jour suivant le premier jour ;
soit par :
une comparaison de l'état de charge de chaque module de batterie (20) identifié existant au premier instant avec une valeur limite initiale de l'état de charge ;
une sélection de l'instant de décharge de chaque module de batterie (20) identifié dont l'état de charge au premier instant dépasse la première valeur limite d'état de charge en tant qu'instant se produisant pendant le premier jour ; et
le report de l'instant de décharge de chaque module de batterie (20) identifié, dont l'état de charge atteint ou s'abaisse en dessous de la première valeur limite d'état de charge existant au premier instant, à un jour suivant le premier jour.

2. Procédé selon la revendication 1, **caractérisé en ce que** le premier instant est 12 heures ou se situe dans un premier intervalle de temps s'étendant symétriquement autour 12 heures, dans lequel le premier intervalle de temps comprend un nombre entier d'heures compris entre 1 et 6.

3. Procédé selon l'une des revendications précédentes, **caractérisé par** :
la mise en œuvre d'une recherche de données météorologiques en ligne à un second instant se produisant pendant le premier jour avant le premier instant ; et
une détermination de la première quantité d'énergie sur la base des données météorologiques.

4. Procédé selon l'une des revendications 1 à 3, **caractérisé en ce que** la première valeur limite d'état de charge est de 0,7.

5. Procédé selon l'une des revendications précédentes, **caractérisé par** :
une détermination, pendant chaque jour d'un deuxième intervalle de temps, d'une troisième quantité d'énergie fournie par la batterie (10) au consommateur pendant ce jour respectif, et
une détermination de la deuxième quantité d'énergie sur la base de chaque troisième quantité d'énergie déterminée, dans lequel le deuxième intervalle de temps se situe immédiatement avant le premier jour et comprend au moins deux jours immédiatement consécutifs.

6. Procédé selon la revendication 5, **caractérisé par** :
une comparaison de la deuxième ou de chaque troisième quantité d'énergie avec une première valeur limite de quantité d'énergie ;
une sélection de l'instant de décharge de chaque module de batterie (20) identifié, en tant qu'instant se produisant pendant le premier jour lorsque la deuxième ou chaque troisième quantité d'énergie atteint ou s'abaisse en dessous de la première valeur limite de quantité d'énergie ; et
la mise en œuvre d'un procédé selon la revendication 1 lorsque la deuxième ou chaque troisième quantité d'énergie dépasse la première valeur limite de quantité d'énergie.

7. Procédé selon l'une des revendications précédentes, **caractérisé par** :
la mise en œuvre, à un troisième instant se produisant avant le premier instant ou se produisant pendant le premier jour après le premier instant, d'une première détection de chacun des modules de batterie (20) pour lesquels une première différence qui lui est associée entre une tension appliquée au module de batterie (20) respectif au troisième instant et une tension appliquée à un autre des modules de batterie (20) au troisième instant dépasse une première valeur limite de tension et/ou qui ont subi un nombre de cycles de charge et de décharge dépassant une première valeur limite de nombre, depuis un instant auquel le module de batterie (20) respectif a été déchargé pour la dernière fois par le biais de la résistance de charge (30) qui lui est associée, jusqu'au troisième instant, dans lequel chaque module de batterie (20) détecté au moyen de la première détection correspond respectivement à un module de batterie (20) identifié qui doit être déchargé par le biais de la résistance de charge (30) qui lui est associée, dans lequel la première valeur limite de tension est en particulier de 100 mV.

8. Procédé selon la revendication 7, **caractérisé en ce que** le troisième instant se produit pendant un jour se situant immédiatement avant le premier jour et chaque module de batterie (20) présente au troisième instant un état de charge qui dépasse une deuxième valeur limite d'état de charge, dans lequel la deuxième valeur limite d'état de charge est en particulier de 0,9.

9. Procédé selon la revendication 7 ou 8, **caractérisé par** :
la mise en œuvre, à un quatrième instant se produisant pendant le premier jour, d'une deuxième détection de chaque module de batterie (20) pour lequel une deuxième différence qui lui est associée entre une tension appliquée au module de batterie (20) respectif au quatrième instant et une tension appliquée à un autre des modules de batterie (20) au quatrième instant dépasse une deuxième valeur limite de tension qui est supérieure à la première valeur limite de tension et/ou qui a subi un nombre de cycles de charge et de décharge dépassant une deuxième valeur limite de nombre, depuis un instant auquel le module de batterie (20) respectif a été déchargé pour la dernière fois par le biais de la résistance de charge (30) qui lui est associée, jusqu'à un quatrième instant, et
une sélection, pour chaque module de batterie (20) détecté au moyen de la deuxième détection, d'un instant de décharge se produisant pendant le premier jour, auquel le module de batterie (20) respectif est déchargé par le biais de la résistance de charge qui lui est associée.

10. Procédé selon l'une des revendications précédentes, **caractérisé par** :
une sélection de l'instant de décharge de chaque module de batterie (20) qui doit être déchargé pendant le premier jour par le biais de la résistance de charge (30) qui lui est associée, en tant qu'instant, qui se produit pendant le premier jour dans un premier état de la batterie (10), auquel chaque module de batterie (20) présente un état de charge qui dépasse une deuxième valeur limite d'état de charge ou se trouve dans une première plage de valeurs d'état de charge comprenant une valeur d'état de charge de 0,5, dans lequel la deuxième valeur limite d'état de charge est en particulier de 0,9 ou la première plage de valeurs d'état de charge s'étend en particulier entre 0,15 et 0,9.

11. Dispositif (40) destiné à mettre en œuvre un procédé selon l'une des revendications précédentes, dans lequel le dispositif (40) comprend une unité de détection (41), une unité d'évaluation (42) et une unité de commande (43), dans lequel à chaque module de batterie (20) est respectivement associé l'un de plusieurs commutateurs (32) pouvant être commandés au moyen de l'unité de commande (43) et par le bais desquels le module de batterie (20) respectif peut être connecté en parallèle avec la résistance de charge (30) qui lui est associée, dans lequel l'unité de détection (41) est conçue pour détecter des valeurs de paramètres d'au moins un paramètre de fonctionnement de chaque module de batterie (20) et pour les fournir à l'unité d'évaluation (42), dans lequel l'unité d'évaluation (42) est conçue pour identifier chacun des modules de batterie (20) qui doit être déchargé par le biais de la résistance de charge (30) qui lui est associée sur la base des valeurs de paramètres fournies, pour déterminer l'état de charge de chaque module de batterie (20) ou de chaque module de batterie (20) identifié existant au premier instant et/ou la première quantité d'énergie et/ou la deuxième quantité d'énergie sur la base des valeurs de paramètres fournies et/ou d'autres données, pour mettre en œuvre chaque première évaluation associée à un module de batterie (20) ou à un module de batterie (20) identifié, pour déterminer, pour chaque module de batterie (20) identifié, sur la base de la première évaluation qui lui est associée, si son instant de décharge se produit pendant le premier jour, et pour chaque module de batterie (20) identifié dont l'instant de décharge se produit pendant le premier jour, pour générer un signal de commande associé au module de batterie (20) respectif à l'instant de décharge du module de batterie (20) respectif et pour le fournir à l'unité de commande (43), dans lequel l'unité de commande (43) est conçue pour fermer le commutateur (32) associé au module de batterie (20) respectif pendant un intervalle de temps de décharge en présence de chaque signal de commande associé à un module de batterie (20) identifié, dans lequel le dispositif est conçu pour mettre en œuvre un procédé selon l'une des revendications précédentes.
